**Europäisches Patentamt**

**European Patent Office**

**Office européen des brevets**

(19)

(11) Veröffentlichungsnummer: **0 050 199**
A1

(12) # EUROPÄISCHE PATENTANMELDUNG

(21) Anmeldenummer: **81106464.1**

(22) Anmeldetag: **20.08.81**

(51) Int. Cl.³: **B 32 B 33/00,** G 02 B 1/10

(30) Priorität: **22.10.80 DE 3039821**

(43) Veröffentlichungstag der Anmeldung: **28.04.82**
**Patentblatt 82/17**

(84) Benannte Vertragsstaaten: **CH DE FR GB IT LI**

(71) Anmelder: **ROBERT BOSCH GMBH, Postfach 50, D-7000 Stuttgart 1 (DE)**

(72) Erfinder: **Brill, Klaus, Tubizerstrasse 62, D-7015 Korntal (DE)**
Erfinder: **Grothe, Wolfgang, Talstrasse 13, D-7531 Tiefenbronn (DE)**

(54) **Mehrschichtsystem für Wärmeschutzanwendung.**

(57) Mehrschichtsystem für Wärmeschutzanwendungen mit einem Träger (110), einer metallischen Schicht (102) und wenigstens einer auf die Metallschicht aufgebrachten dielektrischen Deckschicht (101, 103). Dieses System besitzt zwischen dem Träger und der dielektrischen Deckschicht eine Korrosions-Schutzschicht (100). Diese Schutzschicht verbessert einerseits in hohem Maße die Beständigkeit der Schichten gegen Einflüsse von Wärme und UV-Strahlung, und sie verbessert anderseits die Gleichmäßigkeit der belegten Oberflächen des Trägers, wodurch auch die optischen Eigenschaften des Mehrschichtsystems verbessert werden.

EP 0 050 199 A1

R.  6526

21.10.1980 Rs/Hm

ROBERT BOSCH GMBH, 7000 STUTTGART 1


## Mehrschichtsystem für Wärmeschutzanwendung

Stand der Technik

Die Erfindung geht aus von einem Mehrschichtsystem nach
der Gattung des Hauptanspruchs. Bekannte Schichtsysteme
dieser Art sind in dem Hauptpatent erläutert.


Vorteile der Erfindung

Durch die erfindungsgemäße Weiterbildung des Mehrschichtsystems erreicht man eine wesentliche Verbesserung der
Korrosionsbeständigkeit der aufgebrachten Schichten
bei der Lagerung, da vom Träger ausgehende Korrosions-
einflüsse durch die Schutzschicht praktisch vollständig ausgeschlossen werden. Die vorgeschlagene Schutzschicht hat darüber hinaus noch den Vorteil, daß fertigungsbedingte Unregelmääigkeiten des Trägers durch

...

eine gleichmäßige Deckschicht eliminiert werden; insbesondere tritt keine Schlierenbildung an dem fertigen Mehrschichtsystem mehr auf. Um die optischen Eigenschaften des Schichtsystems zu verbessern, wird zweckmäßigerweise eine Substanz mit niedrigerer Brechzahl als der des Trägers gewählt. Die Schutzschicht bildet eine sehr gleichmäßige Grundlage für das aufzubringende Mehrschichtsystem und enthält wegen des Durchlaufs durch die Vakuumanlage keine störenden Verunreinigungen, welche negative Einflüsse auf die Schichtbildung ausüben könnten.

Zeichnung

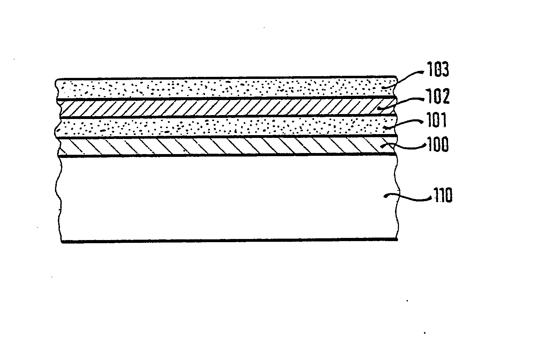

In der Figur ist in schematischer Darstellung ein Ausführungsbeispiel der erfindungsgemäßen Weiterbildung des Mehrschichtsystems dargestellt.

Beschreibung des Ausführungsbeispiels

In der Figur ist mit 110 ein Träger aus einer Kunststofffolie, beispielsweise einer Polyesterfolie bezeichnet. Auf diesen Träger ist zunächst eine Korrosions-Schutzschicht 100, vorzugsweise aus Magnesiumfluorid aufgebracht, auf der wiederum eine dreiteilige Schicht liegt. Alternative zu Magnesiumfluorid sind Kryolit ($Na_3 AlF_6$), Lithiumfluorid (LiF), Calziumfluorid ($Ca F_2$) und Natriumfluorid (NaF). Die dreiteilige Schicht besteht beim gezeichneten Ausführungsbeispiel aus einer Metallschicht 102, vorzugsweise einer Silberschicht, welche beidseitig mit nichtleitenden Schichten 101 und 103 bedeckt ist. Die obere Deckschicht 103 kann entfallen und es sind auch weitere Schichtkombinationen möglich, wie sie in dem zugehörigen Hauptpatent angegeben sind. Als dielek-

trische Schichtenfolge sind auf die Metallschicht 102 vorzugsweise beidseitig Schichten aus Metalloxid und/oder Metallsulfid aufgebracht, wobei sich insbesondere Titanoxid, Zinnoxid, Wismutoxid, Indiumoxid, Tantaloxid und Zinksulfid eignen. Sehr gute Ergebnisse sind erzielt worden mit einer dielektrischen Schicht, welche aus einer beidseitig mit Zinksulfid 101, 103 belegten Silberschicht 102 bestand.

Das erfindungsgemäße Mehrschichtsystem eignet sich neben der Anwendung zum Wärmeschutz auch als heizbares Mehrschichtsystem und kann wegen seiner geringen Lichtverluste im sichtbaren Bereich des Spektrums mit Vorteil beispielsweise zum Einbau in Autoscheiben verwendet werden. Dieser Anwendung kommt auch die hohe Korrosions- beständigkeit des Schichtsystems zugute.

R. 5022

21.10.1980 Rs/Hm

0050199

ROBERT BOSCH GMBH, 7000 STUTTGART 1

Ansprüche

1. Mehrschichtsystem mit hohem Reflexionsvermögen im fernen Infrarot-Spektralbereich und mit hohem Transmissionsvermögen im sichtbaren Spektralbereich und im nahen Infrarot-Spektralbereich, mit einem Träger, mit einer metallischen Schicht aus Silber, Gold, Aluminium, Kupfer oder dgl. und wenigstens einer auf die Metallschicht aufgebrachten dielektrischen Deckschicht, insbesondere nach Patent .... (Patentanmeldung P 30 27 256.1), dadurch gekennzeichnet, daß zwischen den Träger (110) und die dielektrische Deckschicht (101, 102, 103) eine Korrosions-Schutzschicht (100) eingefügt ist.

2. Mehrschichtsystem nach Anspruch 1, dadurch gekennzeichnet, daß die Korrosions-Schutzschicht (100) eine Magnesiumfluoridschicht ist.

...

3. Mehrschichtsystem nach Anspruch 1 oder 2, dadurch gekennzeichnet, daß auf die Korrosions-Schutzschicht (100) eine dielektrische Deckschicht aus einer Metallschicht (102) und wenigstens einer weiteren Schicht (101, 103) aus Metalloxid und/oder Metallsulfid, vorzugsweise Titanoxid, Zinnoxid, Wismutoxid, Indiumoxid, Tantaloxid oder Zinksulfid aufgebracht ist.

4. Mehrschichtsystem nach Anspruch 3, dadurch gekennzeichnet, daß auf die Korrosions-Schutzschicht (100) eine dielektrische Schicht aus einer beidseitig mit Zinksulfid (101, 103) belegten Silberschicht (102) aufgedampft ist.

5. Mehrschichtsystem nach einem der vorhergehenden Ansprüche, dadurch gekennzeichnet, daß der Träger (110) aus einer Polyesterfolie besteht.

0050199

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>US - A - 3 020 376</u> (J.J. HOFMANN et al.) <br><br> * Spalte 2, Zeilen 10-72; Spalte 3, Zeilen 1-44; Figur 7 * | |
| A | <u>DE - B - 1 093 077</u> (LIBBEY-OWENS-FORD) <br><br> * Spalte 2; Spalte 3, Zeilen 1-65; Figur 6 * | |
| A | <u>AT - B - 304 897</u> (REICHERT OPTISCHE WERKE) <br><br> * Seite 2, Zeilen 44-50; Figuren 1,3 * | |
| A | <u>FR - A - 2 385 529</u> (TEIJIN LTD.) <br><br> * Seite 20, Zeilen 37-39; Seite 21, Zeilen 1-22; Seite 38, Zeilen 1-12 * | |
| A | <u>US - A - 4 017 661</u> (F.H. GILLERY) | |
| A | <u>US - A - 3 962 488</u> (F.H. GILLERY) | |
| A | <u>GB - A - 2 017 965</u> (AMERICAN OPTICAL CORP.) | |

**KLASSIFIKATION DER ANMELDUNG** (Int. Cl.³)

B 32 B 33/00
G 02 B 1/10

**RECHERCHIERTE SACHGEBIETE** (Int. Cl.³)

G 02 B 1/10
5/26
B 32 B
C 03 C 17/36
E 06 B 3/66
B 29 D 11/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-02-1982 | VAN THIELEN |

EPA form 1503.1 06.78